# EUROPÄISCHE PATENTSCHRIFT

(11) **EP 0 452 787 B1**
(45) Veröffentlichungstag und Bekanntmachung des Hinweises auf die Patenterteilung: **07.02.1996**
(21) Anmeldenummer: 91105653.9
(22) Anmeldetag: 10.04.1991
(51) Int. Cl.: C08F 2/44, C08K 3/00, C08K 5/09, C08L 27/02

(54) **Verfahren zur Herstellung einer thermostabilen Polyvinylhalogenidharzmasse**
Process for the prepration of a thermostable polyvinylhalide resin composition
Procédé de préparation d'une composition de polyhalogénure de vinyle thermostable

(30) Priorität: 19.04.1990 DE 4012446
(43) Veröffentlichungstag der Anmeldung: 23.10.1991
(73) Patentinhaber: BASF Aktiengesellschaft, D-67063 Ludwigshafen (DE)
(72) Erfinder: Goertz, Hans-Helmut, Dr., W-6713 Freinsheim (DE); Oschmann, Werner, Dr., W-6700 Ludwigshafen (DE); Hatzmann, Guenter, Dr., W-6906 Leimen (DE)

(56) Entgegenhaltungen:
- EP-A- 0 235 636
- DE-A- 2 130 989
- FR-A- 2 318 180
- US-A- 3 985 704
- WPIL, FILE SUPPLIER, AN=88-223094, Derwent Publications Ltd, Londen, GB; & JP-A-63 156 871
- BRITISH POLYMER JOURNAL, Band 21, Heft 4, 1989, Seiten 313-326, GB; D.C. BLACKLEY et al: "Effects of inorganic electrolytes upon emulsion polymerisation reactions"

## Beschreibung

Die Erfindung betrifft ein verfahren zur Herstellung einer thermostabilen Polyvinylhalogenidharzmasse umfassend folgende Schritte:
a) Herstellung eines Emulsionspolymerisats
b) gegebenenfalls Trocknung des Emulsionspolymerisats
c) Abmischen des Emulsionspolymerisats aus a) oder des getrockneten Emulsionspolymerisats aus b) mit einem Polyvinylhalogenid,
dadurch gekennzeichnet, daß vor, während oder nach der Herstellung des Emulsionspolymerisats ein nicht als Initiator wirksames, anorganisches Kaliumsalz oder ein Kaliumsalz einer organischen Carbonsäure mit 1 bis 8 C-Atomen zugegeben wird.

Emulsionspolymerisate finden vielseitige Verwendung als Modifizierungsmittel für Vinylhalogenidharze, wie PVC. Sie werden eingesetzt zur Erhöhung der Wärmeformbeständigkeit, Schlagzähigkeit, als Verarbeitungshilfsmittel und vieles mehr. Die Herstellung der Emulsionspolymerisate erfolgt durch Emulsionspolymerisation unter Verwendung geeigneter Emulgatoren. Hier kommen insbesondere die Alkalisalze von längerkettigen Fettsäuren, von Alkylsulfaten, von Alkylsulfonaten, von alkylierten Arylsulfonaten und von alkylierten Bisphenylethersulfonaten in Frage. Bei Verwendung von fettsauren Salzen muß bei der Polymerisation in alkalischen pH-Bereichen gearbeitet werden, um eine gute Emulgierwirkung zu erzielen. Dies hat in der Regel unerwünschte Gelbverfärbungen der Produkte bzw. der entsprechenden PVC-Formmassen zur Folge. Bei Verwendung von Sulfonaten als Emulgatoren kann auch im sauren pH-Bereich polymerisiert werden, so daß Farbprobleme nicht auftreten. Allerdings ist in diesem Fall bei Einarbeitung des Modifiers in eine mit Ca- und Zn-Carboxylaten stabilisierte PVC-Formmasse eine ungünstige Beeinflussung der Thermostabilität festzustellen.

Der vorliegenden Erfindung lag die Aufgabe zugrunde, PVC-Harzmassen zur Verfügung zu stellen, welche Emulsionspolymerisate enthalten, die mit Sulfonatgruppen enthaltenden Emulgatoren hergestellt sind, aber trotzdem eine ausreichende Thermostabilität aufweisen.

Demgemäß wurde das eingangs definierte Verfahren sowie die Emulsionspolymerisate gefunden.

Im Verfahrensschritt a) wird zunächst ein Emulsionspolymerisat hergestellt, bevorzugt handelt es sich dabei um ein Pfropfpolymerisat. Das Emulsionspolymerisat wird bei der Herstellung, d.h. bei der Polymerisation in Form einer Emulsion erhalten.

Emulsionspolymerisate unterschiedlicher Zusammensetzung sind als Modifizierungsmittel für Polyvinylhalogenidharzmassen bekannt. Bei den Emulsionspolymerisates kann es sich um Pfropfpolymerisate handeln, welche eine Kern/Hülle-Struktur aufweisen, wobei eine oder auch mehrere Hüllen auf einen Kern aufpolymerisiert sein können. Von besonderer Bedeutung sind Pfropfpolymerisate zur Verbesserung der Schlagzähigkeit von Polyvinylhalogenidharzmassen. Bei diesen Pfropfpolymerisaten besteht der Kern oder mindestens eine der Hüllen aus einem kautschukartigen Polymeren mit einer Glasübergangstemperatur unter -20°C. Geeignete Monomere, aus denen das kautschukartige Polymer aufgebaut ist, sind z.B. C₁-C₈-Alkylester der Acrylsäure, konjugierte Diene, bevorzugt Butadien, Gemische von Dienen mit vinylaromatischen Verbindungen, bevorzugt Styrol, oder ungesättigten Nitrilen, bevorzugt Acrylnitril oder Methacrylnitril.

Die nicht-kautschukartigen Hüllen bzw. ein nicht-kautschukartiger Kern bestehen bevorzugt aus Monomeren, wie Styrol, α-Methylstyrol, Acrylnitril und C₁-C₁₂-Alkyl(meth)acrylaten. Bei diesen Monomeren handelt es sich um Monomere, deren Homopolymere Glasübergangstemperaturen über 0°C, bevorzugt über +20°C besitzen. Diese Monomere bilden daher sogenannte "harte" Hüllen bzw. einen "harten" Kern. Die Herstellung von Emulsionspolymerisaten, bzw. Pfropfpolymerisaten durch Emulsionspolymerisation ist bekannt. Wegen Einzelheiten über die Durchführung sei auf die US-A-3 971 835, US-A-4 064 197 und DE-A-2 130 989 verwiesen.

Bei der Herstellung der Emulsionspolymerisate können als Emulgatoren Alkalisalze von längerkettigen Fettsäuren, Alkylsulfate, Alkylsulfonate, alkylierte Arylsulfonate oder alkylierte Biphenylethersulfonate verwendet werden.

Bevorzugt eingesetzte Emulgatoren sind Sulfat- oder Sulfonatgruppen enthaltende organische Verbindungen mit 6 bis 30, vorzugsweise 10 bis 30 Kohlenstoffatomen. Besonders bevorzugt sind C₁₀- bis C₁₈-Alkylsulfonate, sowie dodecylierte Biphenylethersulfonate mit einer bis vier, vorzugsweise zwei Sulfonatgruppen im Molekül. Bevorzugt werden 0,8 bis 3,0 Gew.-%, besonders bevorzugt 1,0 bis 2,0 Gew.-% der Emulgatoren, bezogen auf das Emulsionspolymerisat eingesetzt.

Als Initiatoren können z.B. übliche wasserlösliche thermisch zerfallende Initiatoren wie Na₂S₂O₈, (NH₄)₂S₂O₈ oder Redoxinitiatoren wie z.B. Na₂S₂O₈/Na₂S₂O₅, t-Butylhydroperoxid/Natriumformaldehydsulfoxylat eingesetzt werden.

Die Emulsionspolymerisation kann bei Temperaturen zwischen 30 und 95°C erfolgen.

Bei Pfropfpolymerisaten kann zunächst ein kautschukartiges Polymer mit einer Glasübergangstemperatur unter 0°C in bekannter Weise durch Emulsionspolymerisation hergestellt werden. In Gegenwart des kautschukartigen Polymeren erfolgt dann die Zugabe des Pfropfmonomeren zur wäßrigen Emulsion. Die Monomeren der einzelnen Pfropfhüllen werden zudosiert und zu mehr als 70 Gew.-%, bevorzugt zu mehr als 90 Gew.-%` auspolymerisiert, bevor mit der Zugabe der Monomeren einer weiteren Pfropfhülle begonnen wird.

In Verfahrensschritt b) erfolgt gegebenenfalls eine Trocknung. Bevorzugt handelt es sich dabei um eine Sprühtrocknung.

Die Sprühtrocknung der Emulsionskautschuke entsprechend Verfahrensschritt b) erfolgt in dem Fachmann bekannter Weise. Ausführliche Beschreibungen finden sich z.B. im "Spray drying handbook" (K. Mosters, New York 1985). Bei der Sprühtrocknung der Emulsionskautschuke können rieselfähige Pulver mit einem mittleren Teilchendurchmesser von ca. 100 bis 300 µm, bevorzugt 100 bis 200, besonders bevorzugt 100 bis 150 µm, erhalten werden.

In Verfahrensschritt c) erfolgt die Abmischung des Emulsionspolymerisats aus a) oder des getrockneten Emulsionspolymerisats aus b) mit einem Polyvinylhalogenid.

Die Menge des eingesetzten Emulsionspolymerisats aus a) (berechnet als Feststoffgehalt der Emulsion), bzw. des getrockneten Emulsionspolymerisats aus b) kann dabei im Bereich der üblicherweise eingesetzten Menge liegen. Vorzugsweise werden 5 bis 40 Gew.-%, besonders bevorzugt 10 bis 30 Gew.-% des Emulsionspolymerisats bezogen auf das Polyvinylhalogenid eingesetzt.

Bevorzugt handelt es sich um Polyvinylchlorid.

Die Herstellung der Formmassen aus Polyvinylhalogenid, vorzugsweise PVC und dem Emulsionspolymerisat kann dann nach bekannten Verfahren (s. z.B. Kunststoff-Handbuch, Bd. 2/1, 2/2, 2. Auflage), gegebenenfalls unter Zugabe von Hilfsstoffen wie Stabilisatoren, Gleitmittel, Füllstoffe, Farbstoffe, Pigmente oder weiteren Modifizierungsmitteln zur Verbesserung der Transparenz, Witterungsbeständigkeit, Wärmeformbeständigkeit, Schlagzähigkeit etc. erfolgen.

Zunächst kann das Polyvinylhalogenid mit den oben genannten, weiteren Zusatzstoffen und dem in Verfahrensschritt a) hergestellten Emulsionspolymerisat in Form des bei der Herstellung zunächst erhaltenen Emulsion oder des in Verfahrensschritt b) erhaltenen getrockneten Pulvers in einem Mischaggregat, z.B. einem Fluidmischer gemischt werden.

Die erhaltene Mischung kann nach üblichen Verfahren thermoplastisch verarbeitet werden, z.B. durch Extrusion, Spritzgießen, Kalandrieren, Blasformen und Tiefziehen.

Die üblichen Verarbeitungstemperaturen liegen zwischen 150 und 200°C.

Die in Verfahrensschritt a) hergestellte Emulsion kann auch z.B. dem Polyvinylhalogenid, welches gegebenenfalls mit weiteren oben genannten Zusatzstoffen abgemischt ist, während der thermoplastischen Verarbeitung, insbesondere während der Extrusion zugesetzt werden.

Vor, während oder nach der Herstellung der Emulsionspolymerisate wird ein anorganisches nicht als Initiator wirksames Kaliumsalz oder ein Kaliumsalz einer organischen Carbonsäure mit 1 bis 8 C-Atomen zugegeben. Das Kaliumsalz kann vor, während oder nach der Herstellung, insbesondere nach der Herstellung des Emulsionspolymerisats in die wäßrige Emulsion gegeben werden. Es kann jedoch auch während oder nach der Trocknung zum Emulsionspolymerisat gegeben werden. Bei der Sprühtrocknung kann die Zugabe so erfolgen, daß eine Kaliumsalzlösung im Trocknungsturm separat, aber gleichzeitig mit der Emulsion versprüht wird.

Bevorzugt wird die Emulsion, welche das Kaliumsalz gelöst enthält, getrocknet, insbesondere sprühgetrocknet. Auf diese Weise werden Emulsionspolymerisate in Pulverform erhalten, welche mit dem Kaliumsalz modifiziert sind.

Bei dem Kaliumsalz handelt es sich um ein nicht als Initiator wirksames, anorganisches Kaliumsalz oder um ein nicht als Initiator wirksames Kaliumsalz einer organischen Carbonsäure mit 1 bis 8 C-Atomen. Als Initiatoren wirksame Salze (die nicht eingesetzt werden) sind z.B. Peroxysalze, z.B. K₂S₂O₈.

Bevorzugt handelt es sich bei dem Kaliumsalz um KCl, K₂SO₄, K₃PO₄, K₂NO₃ oder um ein Kaliumsalz einer organischen C₂-C₆-Carbonsäure, wie z.B. Ameisensäure, Essigsäure, Propionsäure, Milchsäure, vorzugsweise einer Carbonsäure mit mehr als einer Carbonsäuregruppe, wie z.B. Oxalsäure, Malonsäure, Bernsteinsäure, Adipinsäure, Äpfelsäure, Weinsäure, Citronensäure. Es kommen auch saure Salze, wie z.B. Kaliumhydrogentartrat in Frage. Besonders bevorzugt sind KCl, K₂SO₄, Kaliumacetat und Kaliumcitrate.

Bevorzugt werden 0,1 bis 2 Gew.-%, besonders bevorzugt 0,3 bis 1 Gew.-%, des Kaliumsalzes, bezogen auf das Emulsionspolymerisat, dem Emulsionspolymerisat zugegeben.

Nach dem erfindungsgemäßen Verfahren sind Emulsionspolymerisate erhältlich, welche ein, nicht als Inititator wirksames, anorganisches Kaliumsalz oder ein Kaliumsalz einer organischen Carbonsäure mit 1 bis 8 C-Atomen enthalten.

Die nach dem erfindungsgemäßen Verfahren hergestellte Polyvinylhalogenidharzmasse kann zur Herstellung von Formteilen verwendet werden.

Die nach dem erfindungsgemäßen Verfahren hergestellten Polyvinylhalogenidharzmassen bzw. daraus hergestellte Formteile zeichnen sich durch eine gute Thermostabilität aus. Sulfat- bzw. Sulfonatgruppen enthaltende Emulgatoren, durch die Farbprobleme, wie sie bei der Verwendung von Fettsäuresalzen auftreten, weitgehend vermieden werden, können eingesetzt werden, ohne Nachteile in der Thermostabilität der erhaltenen Polyvinylhalogenidharzmasse, bzw. der Formteile daraus, in Kauf nehmen zu müssen.

Die Wirkung hängt spezifisch von der Anwesenheit des Kaliumsalze ab. Das wird deutlich, wenn vergleichshalber das Kaliumsalz durch das entsprechende Natriumsalz ersetzt wird. Wahrend das Kaliumsalz zu einer deutlichen Verbesserung der Thermostabililtät der Polyvinylhalogenidharzmasse führt, bleibt diese bei Verwendung des Natriumsalzes unverändert. Die Wirkung des Kaliumsalzes ist mengenabhängig. Mit steigendem Zusatz nimmt die Stabilitätszeit zunächst zu. Bei weiterer Erhöhung wird dann im allgemeinen ein Punkt erreicht, bei dem keine weitere Wirkungssteigerung zu verzeichnen ist, jedoch eine Farbverschlechterung eintritt. Die benötigte optimale Menge Kaliumsalz hängt vom Aufbau des Emulsionspolymerisates ab und kann im Einzelfall leicht ermittelt werden. Bevorzugt werden jedoch, wie bereits im voranstehenden gesagt, 0,1 bis 2,0 Gew.-% eingesetzt.

### Herstellung von Pfropfkautschukemulsionen

### Pfropfkautschukemulsion I

In einem 200 l-Druckapparat, der mit Rührung und Dosiervorrichtungen ausgestattet ist, wurden 28,0 l Wasser, 0,64 kg einer 45 %igen wäßrigen Lösung des Natriumsalzes eines handelsüblichen zweifach sulfonierten, dodecylierten Biphenylethers, 0,06 kg Natriumhydroxymethansulfinat, 5 g Eisen-(II)-sulfat Heptahydrat, 25 g Ethylendiamintetraacetat, 5,95 kg Styrol und 0,24 kg Butandioldiacrylat vorgelegt und dreimal mit 3 bar Stickstoff beaufschlagt und jeweils wieder auf Normaldruck entspannt. Hierauf wurden 28,7 l flüssiges Butadien zugegeben. Unter Rühren wurde auf 80°C aufgeheizt. Nach Erreichen dieser Temperatur wurden von einer Lösung von 0,12 kg tert.-Butylhydroperoxid in 8 l Wasser 1 ml zugegeben und der Rest innerhalb von 3 h zudosiert. Anschließend wurde noch weitere 4 h bei 80°C gehalten. Hiernach wurden 0,04 kg Natriumhydroxymethansulfinat und 0,24 kg Emulgatorlösung zugegeben. Dann wurde innerhalb von 4 h eine Lösung von 0,065 kg tert.-Butylhydroperoxid in 8 l Wasser bei nach wie vor 80°C zudosiert. Parallel dazu wurde innerhalb 2 h eine Mischung von 4,84 kg Styrol, 4,37 kg Methylmethacrylat und 0,08 kg Butandioldiacrylat zugegeben und im Anschluß daran innerhalb 30 min 2,8 kg Methylmethacrylat. Nach Ende aller Zuläufe wurde noch 2 h nachpolymerisiert. Nach Abkühlen auf Raumtemperatur wurden nochmals 0,15 kg Emulgatorlösung zugegeben. Der erhaltene Latex hatte eine mittlere Teilchengröße von 130 nm (Ultrazentrifuge). Der Festoffgehalt betrug 40,0 %, der pH-Wert 3,3.

### Pfropfkautschukemulsion II

In gleicher Weise wie in Beispiel 1 wurde eine Pfropfkautschukemulsion hergestellt mit dem Unterschied, daß als Emulgator (mengengleich) das Natriumsalz eines Alkylsulfonsäuregemisches mit einer mittleren Kettenlänge von 14 bis 15 Kohlenstoffatomen eingesetzt wurde. Der erhaltene Latex hatte eine mittlere Teilchengröße von 100 nm. Der Feststoffgehalt betrug 43,7 %.

### Beispiele 1a bis l

Die Pfropfkautschukemulsion I wurde in mehrere Teile aufgeteilt und diese jeweils mit einem Kaliumsalz in Form eines 10 gew.-%igen Lösung versetzt. Mit diesen Emulsionen wurden wie nachfolgend beschrieben durch Abmischung mit PVC Walzfelle hergestellt und die Stabilitätszeit bestimmt. (Art des Kaliumsalzes und Ergebnisse s. Tabelle 1.)

### Beispiel 2

Pfropfkautschukemulsion II wurde mit einer 10 gew.-%igen Kaliumsulfatlösung versetzt. Im weiteren wurde verfahren wie in den Beispielen 1a bis l.

### Beispiele 3a bis c

Pfropfkautschukemulsion I wurde wie beschrieben, in mehrere Teile aufgeteilt und diese mit einer 10 gew.-%igen eines Kaliumsalzes versetzt.

Anschließend wurde eine Sprühtrocknung durchgeführt, wobei ein Pfropfkautschuk, welches ein Kaliumsalz enthält, erhalten wurde (Pfropfkautschuk A). Die Sprühtrocknung wurde bei einer Temperatur von ca. 130°C an der Düse und 70°C am Ausgang des Sprühturms durchgeführt. Der Trockengehalt des Pulvers betrug 99,8 %. Das erhaltene Pulver wurde wie nachfolgend beschrieben mit PVC zu einem Walzfell verarbeitet und die Stabilitätszeit bestimmt.

### Vergleichsbeispiele V1a, V1b, V2a und V3

Zur Pfropfkautschukemulsion I wurde kein Kaliumsalz gegeben (V1a) bzw. ein Natriumsalz gegeben (V1b). Entsprechend wurde zur Pfropfkautschukemulsion II ebenfalls kein Kaliumsalz gegeben (V2). In Vergleichsversuch 3 wurde eine Pfropfkautschukemulsion I sprühgetrocknet, welche kein Kaliumsalz enthielt (Pfropfkautschuk A').

### Herstellung von PVC-Walzen

Folgende Komponenten wurden in einer Stahl-Schale bei Raumtemperatur intensiv vermischt:
82,6 g S-PVC, K-Wert 57
10,0 g Pfropfkautschuk A bzw. A' oder Pfropfkautschukemulsion I oder II (im Falle von Emulsionen als Feststoffgehalt gerechnet)
5,5 g epoxidiertes Sojabohnenöl
0,2 g 1,4-Dihydro-2,6-dimethyl-3,5-bisdodecyloxycarbonylpyridin
0,35 g Calciumbehenat
0,20 g Zinkstearat
0,25 g Glycerintrimontanat
0,20 g oxidiertes Polyethylenwachs hoher Dichte
Die Mischung wurde auf einem Laborwalzwerk bei 160°C und 15 UpM 5 min gewalzt. Die Walzfellstärke betrug nach Beendigung des Walzvorganges ca. 0,5 mm.

### Ermittlung der Stabilitätszeit

Aus dem Walzfell wurden 12 Plättchen der Größe 2 x 2 cm ausgestanzt und auf einem Aluminiumstreifen in einen Wärmeschrank bei 180°C gelegt. Nach folgenden Zeiten (in min) wurde jeweils ein Plättchen entommen: 0, 5, 10, 15, 20, 30, 45, 60, 75, 90, 105 und 120. Die Zeit nach der eine Verfärbung nach tiefbraun bis schwarz festgestellt wurde, wird als Stabilitätszeit bezeichnet.

**Tabelle 1**

| Thermostabilität von PVC-Formmassen | | | | |
|---|---|---|---|---|
| Beispiel | Emulsion bwz. Pfropfkautschuk | Salz | Menge [Gew.-%] | Stabilitätszeit [min] |
| 1a | I | Kaliumsulfat | 0,2 | 105 |
| 1b | I | Kaliumsulfat | 0,4 | 105-120 |
| 1c | I | Kaliumsulfat | 0,5 | 120 |
| 1d | I | Kaliumsulfat | 0,6 | 120 |
| 1e | I | Kaliumsulfat | 0,8 | 105-120 |
| 1f | I | Kaliumsulfat | 1,0 | 105-120 |
| 1g | I | Kaliumacetat | 0,5 | 120 |
| 1h | I | Kaliumformiat | 0,5 | 105-120 |
| 1i | I | Kaliumhydrogentartrat | 0,5 | 105-120 |
| 1k | I | Kaliumcitrat | 0,5 | 105-120 |
| 1l | I | Kaliumoxalat | 0,5 | 120 |
| 2a | II | Kaliumsulfat | 0,5 | 120 |
| 3a | A | Kaliumsulfat | 0,5 | 120 |
| 3b | A | Kaliumcitrat | 0,5 | 120 |
| 3c | A | Kaliumtartrat | 0,5 | 120 |

| Vergleichsbeispiel | | | | |
|---|---|---|---|---|
| V1a | I | ohne | - | 90 |
| V1b | I | Natriumsulfat | 0,5 | 90 |
| V2a | II | ohne | - | 90 |
| V3a | A' | ohne | - | 90 |

## Patentansprüche

1. Verfahren zur Herstellung einer thermostabilen Polyvinylhalogenidharzmasse umfassend folgende Schritte:
a) Herstellung eines Emulsionspolymerisats
b) gegebenenfalls Trocknung des Emulsionspolymerisats
c) Abmischen des Emulsionspolymerisats aus a) oder des getrockneten Emulsionspolymerisats aus b) mit einem Polyvinylhalogenid,
dadurch gekennzeichnet, daß vor, während oder nach der Herstellung des Emulsionspolymerisats ein nicht als Inititator wirksames, anorganisches Kaliumsalz oder ein Kaliumsalz einer organischen Carbonsäure mit 1 bis 8 C-Atomen zugegeben wird.

2. Verfahren nach Anspruch 1, dadurch gekennzeichnet, daß 0,1 bis 2 Gew.-% eines Kaliumsalzes, bezogen auf das Emulsionspolymerisat, zugegeben werden.

3. Verfahren nach Anspruch 1, dadurch gekennzeichnet, daß das Kaliumsalz ausgewählt ist aus KCl, K₂SO₄ und Kaliumsalzen einer organischen C₂-C₆-Carbonsäure mit mehr als einer Carbonsäuregruppe.

4. Formteile aus nach einem Verfahren gemäß mindestens einem der Ansprüche 1 bis 3 hergestellten Polyvinylhalogenidharzmasse.

## Claims

1. A process for the preparation of a heat-stable polyvinyl halide resin material, comprising the following steps:
a) preparation of an emulsion polymer,
b) if necessary drying of the emulsion polymer and
c) mixing of the emulsion polymer from a) or of the dried emulsion polymer from b) with a polyvinyl halide,
wherein an inorganic potassium salt which does not act as an initiator or a potassium salt of an organic carboxylic acid of 1 to 8 carbon atoms is added before, during or after the preparation of the emulsion polymer.

2. A process as claimed in claim 1, wherein from 0.1 to 2% by weight, based on the emulsion polymer, of a potassium salt are added.

3. A process as claimed in claim 1, wherein the potassium salt is selected from KCl, K₂SO₄ and potassium salts of an organic C₂-C₆-carboxylic acid having more than one carboxyl group.

4. A shaped article comprising a polyvinyl halide resin material prepared by a process as claimed in one or more of claims 1 to 3.

## Revendications

1. Procédé de préparation d'une masse à mouler thermostable de résine de polyhalogénure de vinyle, comprenant les étapes suivantes:
a) Préparation d'un produit de polymérisation en émulsion,
b) Séchage éventuel du produit de polymérisation en émulsion,
c) Mélange du produit de polymérisation en émulsion de l'étape a) ou du produit de polymérisation en émulsion séché de l'étape b) avec un polyhalogénure de vinyle,
caractérisé en ce qu'avant, pendant ou après la préparation du produit de polymérisation en émulsion, un sel de potassium inorganique n'ayant pas l'activité d'un amorceur ou un sel de potassium et d'un acide carboxylique organique à 1-8 atomes de carbone est ajouté.

2. Procédé selon la revendication 1, caractérisé en ce que 0,1 à 2% en poids d'un sel de potassium, par rapport au produit de polymérisation en émulsion, sont ajoutés.

3. Procédé selon la revendication 1, caractérisé en ce que le sel de potassium est choisi parmi KCl, K₂SO₄ et les sels de potassium et d'un acide carboxylique organique en C₂-C₆ contenant plus d'un groupement acide carboxylique.

4. Pièces moulées, formées à partir de masse à mouler de résine de polyhalogénure de vinyle préparée par un procédé selon l'une au moins des revendications 1 à 3.
